# EUROPÄISCHE PATENTANMELDUNG

(11) **EP 3 118 649 A1**
(43) Veröffentlichungstag der Anmeldung: **18.01.2017**
(21) Anmeldenummer: 15002133.5
(22) Anmeldetag: 17.07.2015
(51) Int. Cl.: G01S 7/527, G01S 15/10

(54) **ULTRASCHALL-ABSTANDSMESSVORRICHTUNG UND VERFAHREN ZUR ERMITTLUNG DES ABSTANDES EINES ECHOGEBENDEN GEGENSTANDES**

(71) Anmelder: Pepperl + Fuchs GmbH, 68307 Mannheim (DE)
(72) Erfinder: DÖRR, Klaus, 68229 Mannheim (DE)
(74) Vertreter: Koch Müller Patentanwaltsgesellschaft mbH

(57) **Zusammenfassung**

Ultraschall-Abstandsmessvorrichtung mit einem Ultraschallwandler, wobei der Ultraschallwandler einen Sendemodus und einen Empfangsmodus aufweist, und die Ultraschall-Abstandsmessvorrichtung eine Steuereinheit umfasst, wobei die Steuereinheit mit dem Ultraschallwandler in einer Wirkverbindung steht und mittels der Steuereinheit den Ultraschallwandler zwischen einem Sendemodus und einem Empfangsmodus umzuschalten, so dass der Ultraschallwandler in dem Sendemodus ein Ultraschallsignal mit einer Sendefrequenz aussendet und in dem Empfangsmodus der Ultraschallwandler eingerichtet ist, ein Ultraschallsignal zu empfangen, und die Ultraschall-Abstandsmess-vorrichtung eine Recheneinheit aufweist, wobei die Recheneinheit eingerichtet ist, aus einem Laufzeitunterschied zwischen dem Im Sendemodus ausgesendeten Ultraschallsignal und dem Empfangszeitpunkt eines Echosignals die Entfernung des echobildenden Gegenstandes von dem Ultraschallwandler zu ermitteln, wobei nur dann ein Echosignal vorliegt und die Recheneinheit die Entfernung ermittelt, wenn die Frequenz des empfangenen Ultraschallsignal mit der Sendefrequenz übereinstimmt und weiterhin das empfangenen Ultraschallsignal eine Mindestamplitude aufweist.

## Beschreibung

Die Erfindung betrifft eine Ultraschall-Abstandsmessvorrichtung und ein Verfahren zur Ermittlung des Abstandes eines echogebenden Gegenstandes.

Aus der JP 10-253757 ist eine Ultraschall-Abstandsmessvorrichtung bekannt. Der Abstand eines echogebenden Gegenstandes wird nur ausgewertet, wenn eine Dummy Signal innerhalb eines bestimmten Zeitintervalls mitempfangen wird.

Vor diesem Hintergrund besteht die Aufgabe der Erfindung darin, eine Vorrichtung und ein Verfahren anzugeben, die jeweils den Stand der Technik weiterbilden.

Die Aufgabe wird durch eine Ultraschall-Abstandsmessvorrichtung mit den Merkmalen des Patentanspruchs 1 und durch ein Verfahren gemäß dem Anspruch 7 gelöst. Vorteilhafte Ausgestaltungen der Erfindung sind jeweils Gegenstand von Unteransprüchen.

Gemäß dem ersten Gegenstand der Erfindung wird eine Ultraschall-Abstandsmessvorrichtung mit einem Ultraschallwandler, wobei der Ultraschallwandler einen Sendemodus und einen Empfangsmodus aufweist, und die Ultraschall-Abstandsmessvorrichtung eine Steuereinheit umfasst, wobei die Steuereinheit mit dem Ultraschallwandler in einer Wirkverbindung steht und mittels der Steuereinheit den Ultraschallwandler zwischen einem Sendemodus und einem Empfangsmodus umzuschalten, so dass der Ultraschallwandler in dem Sendemodus ein Ultraschallsignal mit einer Sendefrequenz aussendet und in dem Empfangsmodus der Ultraschallwandler eingerichtet ist, ein Ultraschallsignal zu empfangen, und die Ultraschall-Abstandsmessvorrichtung eine Recheneinheit aufweist, wobei die Recheneinheit eingerichtet ist, aus einer Laufzeit zwischen dem im Sendemodus ausgesendeten Ultraschallsignal und dem Empfangszeitpunkt eines Echosignals die Entfernung des echobildenden Gegenstandes von dem Ultraschallwandler zu ermitteln, wobei nur dann ein Echosignal vorliegt und die Recheneinheit die Entfernung ermittelt, wenn die Frequenz des empfangenen Ultraschallsignal mit der Sendefrequenz übereinstimmt und weiterhin das empfangenen Ultraschallsignal eine Mindestamplitude aufweist.

Gemäß dem zweiten Gegenstand wird ein Verfahren zur Ermittlung der Entfernung eines echogebenden Gegenstandes mittels einer Ultraschall-Abstandsmessvorrichtung bereitgestellt, wobei die Ultraschall-Abstandsmessvorrichtung einen Ultraschallwandler und eine Steuereinheit und eine Recheneinheit umfasst und der Ultraschallwandler einen Sendemodus und einen Empfangsmodus aufweist und die Steuereinheit mit dem Ultraschallwandler in einer Wirkverbindung steht und der Ultraschallwandler mittels der Steuereinheit zwischen den beiden Modi umgeschaltet wird, und In dem Sendemodus ein Ultraschallsignal mit einer Sendefrequenz aussendet und in dem Empfangsmodus ein Ultraschallsignal empfangen wird, und mittels der Recheneinheit aus einer Laufzeit zwischen dem ausgesendeten Ultraschallsignal und eines Echosignals die Entfernung zwischen dem Ultraschallwandler und dem echobildenden Gegenstandes ermittelt wird, wobei eine Überprüfung, ob ein Echosignal vorliegt, durchgeführt wird, indem in einem ersten Verfahrensschritt die Übereinstimmung der Frequenz des empfangenen Ultraschallsignals mit der Sendefrequenz geprüft wird und in einem zweiten Verfahrensschritt das empfangene Ultraschallsignal geprüft wird, ob eine Mindestamplitude vorliegt, und wenn die Frequenz des empfangenen Ultraschallsignal mit der Sendefrequenz übereinstimmt und das empfangene Ultraschallsignal die Mindestamplitude aufweist, ein dritter Verfahrensschritt zur Ermittlung der Entfernung durchgeführt wird.

Es sei angemerkt, dass der Ultraschallwandler vorzugsweise als ein piezokeramisches Element ausgebildet ist. Der Ultraschallwandler wird in dem Sendemodus mit einer HF Spannung Im Bereich zwischen 40 kHz und 800 kHz angesteuert und sendet Ultraschallwellen auf der Ansteuerfrequenz aus. In dem Empfangsmodus werden eintreffende Ultraschallwellen empfangen und eine HF-Spannung mit der Frequenz der Schalldruckänderungen zur Verfügung stellt.

In einer Weiterbildung ist die Steuereinheit eingerichtet, in dem Sendemodus ein Paket von mehreren aufeinanderfolgenden Ultraschallsignalen auszusenden. Ein Vorteil ist, dass sich bei einer Reflektion mehrere Echosignale in kurzer Folge auswerten lassen und die Zuverlässigkeit der Entfernungsbestimmung erhöht wird.

In einer Ausführungsform ist ein Bandpass Frequenzfilter vorgesehen, um im Empfangsmodus nur Ultraschallsignale auf der Sendefrequenz durchzulassen und auszuwerten. Ein Vorteil ist, dass die Störfestigkeit erhöht wird, indem nur die auf der Sendefrequenz liegenden Echosignale ausgewertet werden.

In einer anderen Weiterbildung findet die Prüfung der Übereinstimmung mit der Sendefrequenz des empfangenen Ultraschallsignals und die Prüfung der Mindestamplitude an dem empfangenen undemodulierten Ultraschallsignal statt. Ein Vorteil ist, dass eine aufwändige Auswertung d.h. Entfernungsbestimmung nur dann erfolgt, wenn die empfangenen Ultraschallsignale als Echosignale eingestuft werden, d.h. als gültige Empfangssignale eingestuft werden. Hierdurch erhöht sich die Störsicherheit und Zuverlässigkeit der Entfernungsbestimmung. Ferner lassen sich die Prüfungen schneller an einem undemodulierten als an einem demodulierten Signal durchführen.

In einer anderen Ausführungsform ist in dem Empfangsmodus vorgesehen, ein Paket mit mehreren Ultraschallimpulsen zu empfangen, wobei eine Mindestzahl von Ultraschallimpulse vorliegen muss, um die Entfernung zu ermitteln. Vorzugsweise ist vorgesehen, mehrere Ultraschallimpulse mit einem vorgegeben zeitlichen Abstand zu empfangen. Hierzu wird insbesondere ein Paket aufweisend eine erste Anzahl N1 von aufeinanderfolgenden Ultraschallimpulsen gesendet, wobei für die erste Anzahl gilt 1 < N1 < 20.

Ferner ist vorgesehen, dass zwei unmittelbar aufeinanderfolgenden Ultraschallimpulsen mit einem ersten zeitlichen Abstand ausgesendet werden und in einem vierten Verfahrensschritt der zeitliche Abstand zwischen zwei empfangenen unmittelbar aufeinanderfolgenden Ultraschallimpulsen ermittelt wird und der dritte Verfahrensschritt nur durchführt wird, wenn der ermittelt zeitliche Abstand mit dem ersten zeitlichen Abstand übereinstimmt.

In einer anderen Weiterbildung wird in einem fünften Verfahrensschritt die Signalform eines empfangenen Ultraschallimpuls mit der Signalform des gesendeten Ultraschallimpuls auf Übereinstimmung geprüft, wobei der fünfte Verfahrensschritt vor dem dritten Verfahrensschritt durchgeführt wird und der dritte Verfahrensschritt nur ausgeführt wird, wenn ein vorgegebenes Maß an Übereinstimmung zwischen den empfangenen Ultraschallimpuls und dem gesendeten Ultraschallimpuls gegeben ist.

Ferner ist es vorteilhaft, wenn der dritte Verfahrensschritt nur durchgeführt wird, wenn die Anzahl der aufeinanderfolgenden empfangenen Ultraschallimpulse größer als 1 ist oder in einer alternativen Ausbildung die Anzahl der empfangenen Ultraschallimpulse genau der ausgesendeten Anzahl der Ultraschallimpulse entspricht. Untersuchungen haben gezeigt, dass es auch vorteilhaft Ist im Empfangsmodus an der Stelle der ersten Frequenz das Ultraschallsignal solange aufzuintegrieren, bis die Höhe der Mindestamplitude des Ultraschallsignals erreicht wird oder eine maximal vorgegebene Integrationszeit überschritten wird.

In einer Weiterbildung werden der erste Verfahrensschritt und der zweite Verfahrensschritt nahezu gleichzeitig oder genau gleichzeitig durchgeführt werden.

Die Erfindung wird nachfolgend unter Bezugnahme auf die Zeichnungen näher erläutert. Hierbei werden gleichartige Teile mit identischen Bezeichnungen beschriftet. Die dargestellten Ausführungsformen sind stark schematisiert, d.h. die Abstände und die lateralen und die vertikalen Erstreckungen sind nicht maßstäblich und weisen, sofern nicht anders angegeben, auch keine ableitbaren geometrischen Relationen zueinander auf. Darin zeigt:
- Figur 1: eine Ansicht auf eine erste erfindungsgemäße Ausführungsform,
- Figur 2a: eine zeitliche Abfolge zwischen einem gesendeten Ultraschallimpuls und einem Echoimpuls, dargestellt in einem Amplituden über der Zeit Diagramm,
- Figur 2b: Ansicht auf eine Bandpassfilterung in einem Intensität über der Frequenz Diagramm.

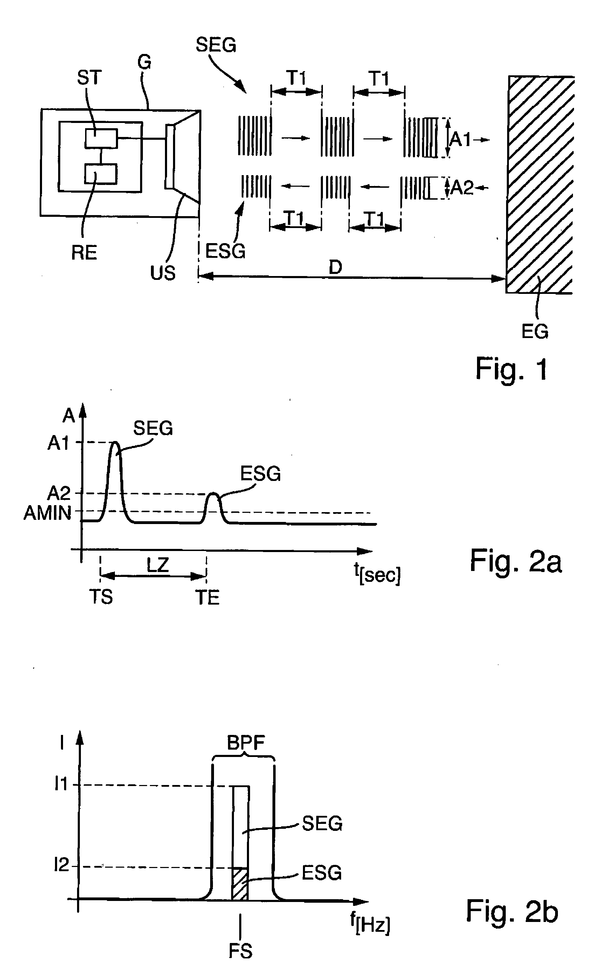

Die Abbildung der Figur 1 zeigt eine Ansicht einer ersten Ausführungsform, aufweisend eine Ultraschall-Abstandsmessvorrichtung G. Die UltraschallAbstandsmessvorrichtung G weist einen Ultraschallwandler US und eine Steuereinheit ST und eine Recheneinheit RE auf. Die Steuereinheit ST steht mit dem Ultraschallwandler ST mittels einer elektrischen Verbindung in einer Wirkverbindung. Der Ultraschallwandler US weist einen Sendemodus und einen Empfangsmodus auf, wobei mittels der Steuereinheit ST der Ultraschallwandler US zwischen einem Sendemodus und einem Empfangsmodus umschaltet. In dem Sendemodus sendet der Ultraschallwandler US mehrere aufeinanderfolgende Ultraschallsignale SEG mit einer vorgegebenen Sendefrequenz als eine Pulsfolge aus. Zwischen den ausgesendeten unmittelbar aufeinanderfolgenden Ultraschallsignalen ist ein zeitlicher Abstand T1 ausgebildet. Die ausgesendeten Ultraschallsignale SEG werden an einem echogebenden Gegenstand EG, beispielsweise einer Wand, unter Beibehaltung des zwischen zwei Pulsen vorgegebenen zeitlichen Abstands T1 zurückreflektiert. Hierbei schwächt sich die Amplitude von einem ersten hohen Wert A1 auf einen zweiten niedrigen Wert A2 ab. Nach dem Senden wird der Ultraschallwandler US von dem Sendemodus in den Empfangsmodus umgeschaltet und empfängt die mit der niedrigen Amplitude reflektierten Ultraschallsignale ESG.

Nach dem Empfang wird von der Steuereinheit ST an den undemodulierten empfangenen Ultraschallsignalen ESG die Frequenz auf Übereinstimmung mit der Frequenz der gesendeten Ultraschallsignale SEG geprüft. Bei einer Übereinstimmung der Frequenzen wird geprüft, inwieweit die empfangenen Ultraschallsignale ESG eine Mindestamplitude AMIN aufweisen. Sofern auch die Mindestamplitude gegeben ist, wird von der Recheneinheit RE aus der Laufzeit LZ zwischen dem im Sendemodus ausgesendeten Ultraschallsignal SEG und dem Empfangszeitpunkt des Echosignals eine Entfernung D des echobildenden Gegenstandes EG von dem Ultraschallwandler US ermittelt. Indem eine Pulsfolge reflektiert wird, lässt sich die Bestimmung der Entfernung D mehrfach durchführen und die Genauigkeit wesentlich erhöhen.

In der Abbildung der Figur 2a eine zeitliche Abfolge in einem Diagramm Amplitude A über der Zeit t zwischen einem einzigen gesendeten Ultraschallimpuls und einem einzigen Echoimpuls für die Anordnung der Figur 1 dargestellt. Im Folgenden werden nur die Unterschiede zu der Abbildung der Figur 1 erläutert. Der Ultraschallwandler US sendet die Ultraschallsignale SEG zu einem ersten Zeitpunkt TS mit der Amplitude A1 aus und empfängt zu einem zweiten Zeitpunkt TE das Ultraschallsignal ESG mit der Amplitudenwert A2, wobei der Wert A2 der empfangenen Amplitude oberhalb einer Mindestamplitude AMIN liegt. Aus der Differenz der beiden Zeitpunkten TS und TE wird die Laufzeit LZ berechnet.

In der Figur 2b ist in einem Diagramm die Intensität I über der Frequenz f ein Bandpassfiter BPF dargestellt. Die Filterung mittels des Bandpassfilters BPF ist der Ermittlung der Laufzeit LZ vorgeschaltet um Störsignale zu unterdrücken. Es zeigt sich, dass das Bandpassfilter BPF genau mit einer angemessenen Halbwertbreite von wenigen 100 Hz um die Mitte der Frequenz FS der gesendeten Ultraschallsignale SEG gelegt ist und dass das ausgesendete Ultraschallsignal SEG eine erste Intensität I1 und das empfangene Ultraschallsignal ESG eine zweite wesentliche kleinere Intensität I2 aufweist, wobei die Intensität grundsätzlich proportional zu dem Quadrat der Amplitude ist.

Als Alternative lässt sich anstelle des Bandpasses auch eine digitale Filterung vornehmen. Ein Vorteil ist, dass die hohen Anforderungen an eine geringe Halbwertsbreite des Bandpassfilters entfallen.

## Patentansprüche

1. Ultraschall-Abstandsmessvorrichtung (G) aufweisend,
einen Ultraschallwandler (US), wobei der Ultraschallwandler (US) einen Sendemodus und einen Empfangsmodus aufweist,
eine Steuereinheit (ST), wobei die Steuereinheit (ST) mit dem Ultraschallwandler (US) in einer Wirkverbindung steht, und den Ultraschallwandler (US) zwischen einem Sendemodus und einem Empfangsmodus umschaltet, so dass der Ultraschallwandler (US) in dem Sendemodus ein Ultraschallsignal (SEG) mit einer Sendefrequenz (FS) aussendet und in dem Empfangsmodus der Ultraschallwandler (US) eingerichtet ist, ein Ultraschallsignal (ESG) zu empfangen,
einer Recheneinheit (RE), wobei die Recheneinheit (RE) eingerichtet ist, aus einer Laufzeit (LZ) zwischen dem im Sendemodus ausgesendeten Ultraschallsignal (SEG) und dem Empfangszeitpunkt eines Echosignals die Entfernung (D) des echobildenden Gegenstandes (EG) von dem Ultraschallwandler (US) zu ermitteln,
**dadurch gekennzeichnet, dass**
nur dann ein Echosignal vorliegt und die Recheneinheit (RE) die Entfernung (D) ermittelt, wenn die Frequenz (FS) des empfangenen Ultraschallsignal (ESG) mit der Sendefrequenz übereinstimmt und das empfangenen Ultraschallsignal (ESG) eine Mindestamplitude (AMIN) aufweist.

2. Ultraschall-Abstandsmessvorrichtung (G) nach Anspruch 1, **dadurch gekennzeichnet, dass** die Steuereinheit eingerichtet ist, in dem Sendemodus ein Paket von mehreren aufeinanderfolgenden Ultraschallsignalen auszusenden.

3. Ultraschall-Abstandsmessvorrichtung (G) nach Anspruch 1 oder Anspruch 2, **dadurch gekennzeichnet, dass** ein Bandpass Frequenzfilter vorgesehen ist, um im Empfangsmodus nur Ultraschallsignale auf der Sendefrequenz durchzulassen und auszuwerten.

4. Ultraschall-Abstandsmessvorrichtung (G) nach einem oder mehreren der vorangegangenen Ansprüche, **dadurch gekennzeichnet, dass** die Prüfung der Übereinstimmung mit der Sendefrequenz des empfangenen Ultraschallsignal und die Prüfung der Mindestamplitude an dem empfangenen undemodulierten Ultraschallsignal stattfindet.

5. Ultraschall-Abstandsmessvorrichtung (G) nach einem oder mehreren der vorangegangenen Ansprüche, **dadurch gekennzeichnet, dass** in dem Empfangsmodus vorgesehen ist, ein Paket mit mehreren Ultraschallimpulsen zu empfangen und eine Mindestzahl von Ultraschallimpulse vorliegen muss, um die Entfernung zu ermitteln.

6. Ultraschall-Abstandsmessvorrichtung (G) nach einem der vorstehenden Ansprüche, **dadurch gekennzeichnet, dass** vorgesehen ist, mehrere Ultraschallimpulse mit einem vorgegeben zeitlichen Abstand zu empfangen.

7. Verfahren zur Ermittlung des Entfernung (D) eines echogebenden Gegenstandes (EG) mittels einer Ultraschall-Abstandsmessvorrichtung (G), wobei die Ultraschall-Abstandsmessvorrichtung (G) einen Ultraschallwandler (US) und eine Steuereinheit (ST) und eine Recheneinheit (RE) umfasst und der Ultraschallwandler (US) einen Sendemodus und einen Empfangsmodus aufweist und die Steuereinheit (ST) mit dem Ultraschallwandler (US) in einer Wirkverbindung steht und der Ultraschallwandler (US) mittels der Steuereinheit (ST) zwischen den beiden Modi umgeschaltet wird, und in dem Sendemodus ein Ultraschallsignal (SEG) mit einer Sendefrequenz (FS) aussendet und in dem Empfangsmodus ein Ultraschallsignal (ESG) empfangen wird, und
mittels der Recheneinheit (RE) aus einer Laufzeit (LZ) zwischen dem ausgesendeten Ultraschallsignal (SEG) und eines Echosignals die Entfernung (D) zwischen dem Ultraschallwandler (US) und dem echobildenden Gegenstandes (EG) ermittelt wird,
**dadurch gekennzeichnet, dass**
eine Überprüfung, ob ein Echosignal vorliegt, durchgeführt wird, indem in einem ersten Verfahrensschritt die Übereinstimmung der Frequenz des empfangenen Ultraschallsignals (ESG) mit der Sendefrequenz (FS) und in einem zweiten Verfahrensschritt das empfangene Ultraschallsignal (ESG) eine Mindestamplitude (AMIN) aufweist, geprüft wird und wenn die Frequenz des empfangenen Ultraschallsignal (ESG) mit der Sendefrequenz (FS) übereinstimmt und das empfangene Ultraschallsignal (ESG) die Mindestamplitude (AMIN) aufweist, ein dritter Verfahrensschritt zur Ermittlung der Entfernung (D) durchgeführt wird.

8. Verfahren zur Ermittlung der Entfernung (D) eines echogebenden Gegenstandes (EG) nach Anspruch 7, **dadurch gekennzeichnet, dass** ein Paket aufweisend eine erste Anzahl N1 von aufeinanderfolgenden Ultraschallimpulsen gesendet wird, wobei für die erste Anzahl gilt 1 < N1 < 20.

9. Verfahren zur Ermittlung der Entfernung (D) eines echogebenden Gegenstandes (EG) nach Anspruch 7 oder Anspruch 8, **dadurch gekennzeichnet, dass** zwei unmittelbar aufeinanderfolgenden Ultraschallimpulsen einen ersten zeitlichen Abstand ausgesendet werden und in einem vierten Verfahrensschritt der zeitliche Abstand zwischen zwei empfangenen unmittelbar aufeinanderfolgenden Ultraschallimpulsen ermittelt wird und der dritte Verfahrensschritt nur durchführt wird, wenn der ermittelt zeitliche Abstand mit dem ersten zeitlichen Abstand übereinstimmt.

10. Verfahren zur Ermittlung der Entfernung (D) eines echogebenden Gegenstandes (EG) nach einem oder mehreren der Ansprüche 7 bis 9, **dadurch gekennzeichnet, dass** in einem fünften Verfahrensschritt die Signalform eines empfangenen Ultraschallimpuls mit der Signalform des gesendeten Ultraschallimpuls auf Übereinstimmung geprüft wird und der fünfte Verfahrensschritt vor dem dritten Verfahrensschritt durchgeführt wird und der dritte Verfahrensschritt nur ausgeführt wird, wenn ein vorgegebenes Maß an Übereinstimmung gegeben ist.

11. Verfahren zur Ermittlung der Entfernung (D) eines echogebenden Gegenstandes (EG) nach einem oder mehreren der Ansprüche 7 bis 10, **dadurch gekennzeichnet, dass** der dritte Verfahrensschritt nur durchgeführt wird, wenn die Anzahl der aufeinanderfolgenden empfangenen Ultraschallimpulse größer als 1 ist oder die Anzahl der empfangenen Ultraschallimpulse genau der ausgesendeten Anzahl der Ultraschallimpulse entspricht.

12. Verfahren zur Ermittlung der Entfernung (D) eines echogebenden Gegenstandes (EG)nach einem oder mehreren der Ansprüche 7 bis 11, **dadurch gekennzeichnet, dass** im Empfangsmodus an der Stelle der Sendefrequenz (FS) das empfangene Ultraschallsignal (ESG) solange aufintegriert wird, bis die Höhe der Mindestamplitude (AMIN) des empfangenen Ultraschallsignals (ESG) erreicht wird oder eine maximal vorgegebene Integrationszeit überschritten wird.

13. Verfahren zur Ermittlung der Entfernung (D) eines echogebenden Gegenstandes (EG) nach einem oder mehreren der Ansprüche 7 bis 12, **dadurch gekennzeichnet, dass** der erste Verfahrensschritt und der zweite Verfahrensschritt nahezu oder genau gleichzeitig durchgeführt werden.
